Europäisches Patentamt

European Patent Office

Office européen des brevets

(11) Publication number: **0 213 946**
A2

# EUROPEAN PATENT APPLICATION

(21) Application number: 86306697.3

(22) Date of filing: 29.08.86

(51) Int. Cl.⁴: **H 01 B 9/02**

(30) Priority: 30.08.85 GB 8521598
13.09.85 GB 8522706

(43) Date of publication of application:
11.03.87 Bulletin 87/11

(84) Designated Contracting States:
AT BE CH DE FR GB IT LI LU NL SE

(71) Applicant: KABLE TAPES LTD
1130 Wall Street
Winnipeg Manitoba(CA)

(72) Inventor: O'Connor, Lawrence
6027 Southbolne Drive
Winnipeg Manitoba(CA)

(74) Representative: Frost, Dennis Thomas et al,
WITHERS & ROGERS 4 Dyer's Buildings Holborn
London, EC1N 2JT(GB)

(54) Shielding tape for electrical power cable.

(57) A shielding tape (10) for power cable comprises a conductive metal layer (11) which is bare on one side and has a coating (12) of a thermally bondable polyolefin on the other side and strip (13) along one edge so that the metal layer (11) can be formed into a sleeve with the strip bonding (13) to the outer layer (14) and the outer layer (12) bonding to the jacket (38) of the cable. The metal layer (11) can be formed into convolutions (14, 15, 16) with water blocking material (24) received in the recesses (17) between the convolutions. The amount of conductive material in the layer (11) can be sufficient to act as the neutral return conductor for the power cable.

FIG.2

- 1 -

## SHIELDING TAPE FOR ELECTRICAL POWER CABLE

This invention relates to a shielding tape for an electrical power cable.

In electrical power cables it is customary to provide a central core of conductors around which is extruded a layer of semi-conductive plastic to equalize dielectric stresses between the core conductors and the succeeding layer of insulation, which is usually crosslinked polyethylene or an equivalent material and is extruded around the semi-conductive layer. A second layer of semi-conductive plastic is then extruded over the insulating layer. In some cases there is wrapped around the second semi-conductive layer a plurality of helically wound, spaced conductors forming the neutral return of the cable. The usual conductors are generally circular in cross-section and lie in intimate contact with the semi-conducting layer so that the layer acts to distribute the dielectric stresses between the conductors and the insulating layer. Over the neutrals and outer jacket usually of polyethylene or the like is finally extruded.

While the above relates to single phase cables, similar constructions may be employed in three phase type cables, where three conductors individually insulated and shielded semi-conductively are arranged in triangular formation, provided with fillers to secure a circular cross-section and then wrapped by the semi-conducting layer, the optional neutral conductors and an extruded jacket.

Depending upon the cable specification, the neutral return conductors may not be provided in which case the jacket can be extruded directly around the semi-conductive layer.

In all of the above constructions it has been vitally important to exclude moisture from penetrating to the insulating layer of the cable, in which case the phenomenon of "treeing" may occur leading to a lessening of the dielectric strength of the insulating layer and eventual cable failure. A metallic shield over the neutral conductors, or over the second semi-conductive layer, has therefore become conventional practice to provide a moisture barrier. The shield therefore requires to be effectively bonded to itself to define a sleeve which surrounds the inner cable parts to prevent the ingress of moisture penetrating to the insulating layer. The shield can in some cases also provide electrical shielding from lightening or other power surges.

In U.S. patent 4472597 (UEMATSU issued September 18, 1984) there was disclosed an arrangement in which the metal shielding tape has an electrically conductive tape layer on an inner surface thereof so as to provide electrical continuity between the shielding tape and the neutrals. This is stated to prevent the generation of a significant potential between the neutrals and the shield which can in some cases cause pin holes to be generated in the shield.

However this tape is not satisfactory since it does not provide any effective mechanism for sealing the tape edges and it includes the conductive polymer layers included and complex and expensive and may not be compatible with other layers in the resultant cable. The patent disclosure merely overlooks the necessity for sealing of the edges and shows the tape as a cylinder without any seam.

It is one object of the present invention, therefore, to provide an improved shielding tape for an electrical power cable.

According to a first aspect of the invention there is provided a shielding tape for use in a power cable comprising a metallic layer having two opposed surfaces and two spaced edges, characterized in that one of said surfaces is substantially wholly bare for intimate electrical contact with parts of the cable thereagainst, and in that there is provided a thermally bondable polyolefin material layer completely covering the
other of said surfaces, and a strip of thermally bondable
polyolefin material on said one surface at one edge of
the layer arranged for thermal bonding to said polyolefin
material layer when said edges are overlapped to form a
sleeve.

According to a second aspect of the invention
there is provided a shielding tape for use in a power
cable comprising of a metallic layer having two opposed
surfaces and two spaced edges characterized in that said
tape includes in combination with said layer, metallic
conductor means having sufficient metallic material to
provide a conductive path for defining a neutral conduct-
or for said cable, and means at one edge of one surface
for bonding said one surface to the other surface at said
one edge when said edges are overlapped to form said
layer into a sleeve.

One embodiment of the invention will now be
described in conjunction with the accompanying drawings
in which:

- 5 -

Figure 1 is a schematic cross-sectional view of a shielding tape according to the invention.

Figure 2 is a cross-sectional view of an electrical power cable incorporating the tape of Figure 1.

Figure 3 is a schematic cross-sectional view of an alternative form of tape according to the invention.

Figure 4 is a similar schematic cross-sectional view of a yet further tape according to the invention.

Figure 5 is a schematic cross-sectional view of a still further tape according to the invention.

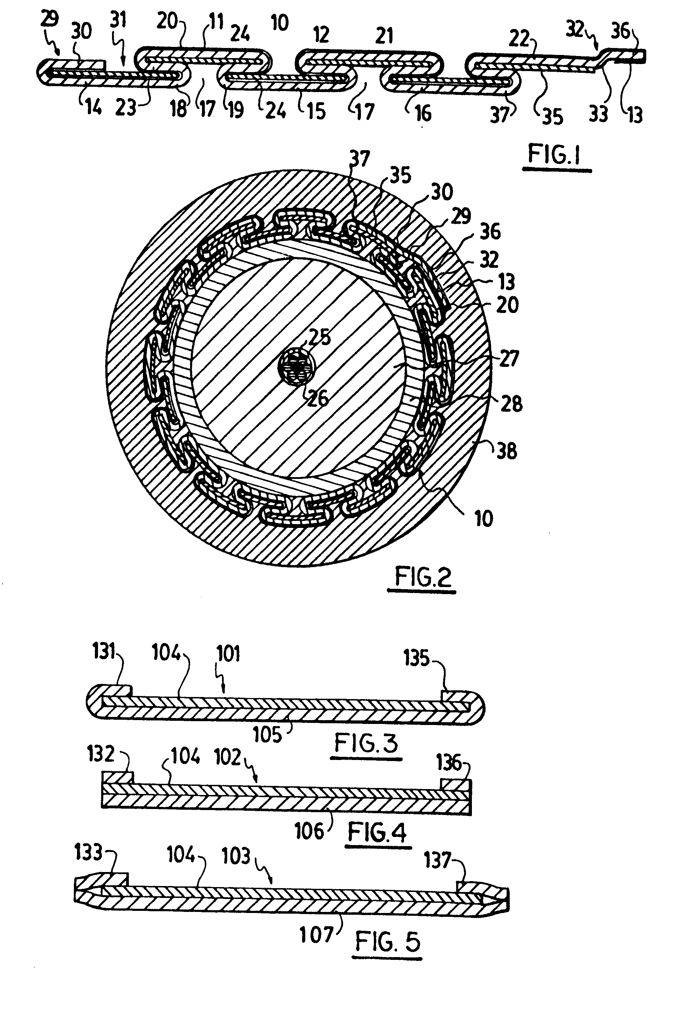

Referring firstly to Figure 1, a tape generally indicated at 10 comprises a sheet of copper foil 11 which is coated wholly on one side with a thermally actuable bonding polyolefin 12. A narrow strip of a compatible polyolefin indicated at 13 is applied to the opposed side of the foil or layer 11 at one edge.

The layer 11 is then folded into a plurality of S and Z shaped convolutions thus forming flat portions of the tape on a underside as indicated at 14, 15 and 16. Each of the flat portions constitutes a part of the undersurface of the tape and all of the portions are co-planar and extend longitudinally of the tape. Between each of the portions is a narrow space indicated at 17 adjacent a left and right fold in the tape indicated at 18 and 19 respectively.

In addition the convolutions form flat outer portions 20, 21 and 22 of the tape which again lie co-planar and define flat surfaces longitudinal of the tape with narrow spaces therebetween in a symmetrical manner to the portions of the underside but in off-set manner relative thereto. The convolutions thus define recesses therebetween as indicated at 17.

In between the upper portion 20 and the lower portion 14 of the tape is a parallel convolution portion 23 which extends from a fold at one end of the portion 14 to a fold at the other end of the portion 20 and has a length slightly less than half the length of the portions 14 and 20 so the folds occur adjacent the center of the respective portions leaving, as mentioned previously, a narrow space or recess 17.

Comparing Figures 1 and 2, it will be noted that only a portion of the tape is illustrated in Figure 1.

During the formation of the convolutions, water blocking tapes 24 are introduced into the recesses defined between the convolutions that is between the portions 14 and 20 and intermediate folded portion 23.

Thus the tapes 24 are trapped in the convolutions and are carried thereby during any processing of the tape.

The water blocking tapes can be of a conventional construction comprising a substrate tape upon which is carried a hydrophilic swellable material in powder, gel or other form.

Turning now to Figure 2, there is shown a cross-section of a single phase power cable with a concentric neutral arrangement. A central bundle of conductors is indicated at 25 and is surrounded by a semi-conducting plastic layer 26 and an insulating layer 27 both of which are extruded onto the central conductors in turn. The insulating layer 27 may be formed from crosslinked polyethylene or the like. The insulating layer is in turn surrounded by an outer semi-conducting layer 28.

The tape 10 of Figure 1 is then wrapped around the outer semi-conducting layer 28 either directly longitudinally or in a slow helix with the lower surface defined by the portions 14, 15 and 16 in contact with the semi-conducting layer 28.

As the lower surface of the tape is bare and is formed by the flat surface portions, it forms the inner surface of a plain circular cylinder when wrapped into the condition of Figure 2 and therefore lies in intimate electrical and thermal contact with the semi-conducting layer 28 so as to equalize any electrical stresses which may occur and also to provide excellent heat transfer of heat generated in the core of the cable.

At the end of the tape shown in Figure 1, the left hand end indicated at 29 terminates at a portion 30 similar to the portion 23 which thus confines a final upper recess 31 and tape 24.

At the other end indicated at 32, the final bend or fold indicated at 33 instead of turning downwardly to close around the last tape indicated at 35, turns upwardly to form a final portion 36 of a length equal to or slightly greater than half the length of one of the portions 20, 21 or 22. An underside of the portion 36 carries the strip 13.

When the tape is fully wrapped around the semi-conducting layer as indicated in Figure 2, the seam or seal between the ends 29 and 32 is obtained by placing the portion 30 under the last tape 35 so as effectively to define the further convolution cooperating with the last convolution indicated at 37. The portion 36 then extends upwardly and over the first convolution including the portion 20 adjacent the end 29 of the tape. The strip 13 is therefore bonded to the layer 12 to complete the seal, the heat for the bonding being provided during the extrusion of a jacket 38 around the outer surface of the tape. Thus the heat of extrusion solidly bonds the film 13 to the outer tape surface providing a moisture proof barrier.

As shown in Figure 2, the water blocking tapes 24 are arranged so that if water penetrates the outer jacket 38 for example at a splice either inside or outside of the tape 10, the tapes 24 can swell and effectively prevent longitudinal movement of moisture along the cable. Furthermore, the tapes 24 act as a resilient buffer, reducing stresses during heating and cooling. In addition the outer film layer 12 securely bonds the tape 10 to the jacket 38 during the jacket extrusion process, resulting in a structure which resists wrinkling as the cable is installed.

The thickness of the layer 11 is chosen relative to the specification of the cable to provide sufficient electrical current carrying capacity to act as the neutral return conductor of the cable. Thus the tape 10 acts as both the shield for the cable preventing moisture entrance into the cable and in addition provides the neutral return conductor.

The lamination of the outer layer 12 to the inner surface of the outer jacket during the extrusion process adds to the structural qualities of the cable preventing damage during bending which occurs as the cable is being installed.

The folded configuration of the tape provides a first advantage that it enables sufficient material of the metal layer to provide the neutral return conductor without requiring a thickness of the layer which prevents its handling in conventional forming processes. Secondly the folded or convoluted configuration defines simply and readily recesses or spaces which can be filled with the waterblocking tape. The waterblocking tape may if electrically required have semi-conducting characteristics to assist in reducing electrical stresses. Furthermore the convolutions particularly when combined with the filler tapes 24 act as an expansion buffer to absorb stresses caused by load changes and resultant expansion and contraction of the cable.

The inner surface of the tape is bare and thus provides intimate electrical communication with the semi-conducting layer over the core insulation. This direct intimate contact substantially reduces dielectric stress concentration. In addition the inner surface of the tape

0213946

- 11 -

using the convolutions as shaped is substantially formed as a cylindrical surface by the flat portions when formed to follow the cable shape. This large area of direct contact between the inner surface and the semi-conducting layer provides a markedly improved heat transfer system as opposed to the conventional separate neutral conductors which are generally of circular cross-section and accordingly have a very low area of intimate contact with the semi-conducting layer and with the cable jacket.

Furthermore, the flat surfaces defined by the neutral conductor allow the seal at the overlapped edger to be firmly, constantly and effectively completed; in comparison with the poor seal which may be obtained above it must be made despite changing pressures caused by the hills and valleys defined by the conventional individual helically wrapped circular cross-section neutrals.

The polyolefin layer both of the outer layer 12 and the strip 13 may be ethylene-acrylic acid co-polymer, formed as a layer on the copper sheet 11 by lamination in wide web form prior to slitting of the web into a number of tape layers 11. The strip 13 can be applied in lamination in the tape form.

In an alternative arrangement, the layer 11 may not be formed as the neutral conductors of the cable. In

- 12 -

such arrangements the neutral conductors may be omitted in cables where that is permissible. In other arrangements the neutrals may be supplied as separate wrapped conductors of the conventional form with the tape 10 directly contacting the neutrals with the bare inner surface as previously described.

The layer 11 is preferably of copper but may be formed of any other suitable conductive material. Its thickness lies in the range of .005 to .030 inches where the layer acts as a neutral return; and in the range .005 to .010 inches when it acts only as a shield.

Figures 3, 4 and 5 show alternative arrangements of tape indicated at 101, 102 and 103 respectively with a copper or similar metal shielding layer 104 similar to the layer 11. In addition a polyolefin layer 105, 106 and 107 is applied to one side of the layer 104 so that the other side is bare apart from a strip 131, 132, 133 similar to the strip 13. The tape operates as previously described with the layer 104 acting either simply as a shield or as a shield and combined neutral.

In the case of Figure 3, the strip 131 is formed by folding an edge portion of the layer 105 around an edge of the layer 104. A similar strip 135 is applied at the opposed edge in identical manner so the tape can be wrapped either left handed or right handed as required by the cable manufacturer. In Figure 4 a similar strip 136 is applied similarly to the strip 132 and in this case the strips 132 and 136 can be applied prior to slitting of the tape so that slitting takes place along the center of the wider strip forming the strips 132, 136. In Figure 5, a strip 137 is applied similar to the strip 133. In this case the strips are laminated to the lower layer 107 outside the edges of the layer 104 and then slit subsequent to the lamination.

To improve the longitudinal bending characteristics of the cable, transverse or circumferential corrugations may be introduced into the tape prior to wrapping, especially with the plane conductor/shield of Figures 3, 4 and 5.

In a further alternative arrangement (not shown) the layer 12 can be omitted and sealing of the tape 10 at the junction obtained by supply of an adhesive for example a hot melt adhesive along the overlapped portions 36 and 20.

0213946

- 14 -

CLAIMS

(1)    A shielding tape for use in a power cable comprising a metallic layer having two opposed surfaces and two spaced edges, characterized in that one of said surfaces is substantially wholly bare for intimate electrical contact with parts of the cable thereagainst, and in that there is provided a thermally bondable polyolefin material layer completely covering the other of said surfaces, and a strip of thermally bondable polyolefin material on said one surface at one edge of the layer arranged for thermal bonding to said polyolefin material layer when said edges are overlapped to form a sleeve.

(2)    A shielding tape for use in a power cable comprising a metallic layer having two opposed surfaces and two spaced edges, characterized in that said tape includes in combination with said layer, metallic conductor means having sufficient metallic material to provide a conductive path for defining a neutral conductor for said cable, and means at one edge of one surface for bonding said one surface to the other surface at said one edge when said edges are overlapped to form said layer into a sleeve.

(3)    The invention according to Claim 2 wherein said layer includes a thermally bondable polyolefin material layer completely covering the other of said surface thereof and a strip of thermally bondable polyolefin material at said one edge for thermal bonding to form said layer.

(4) The invention according to claim 2 or 3 wherein said conductor means comprises a flat layer integral with said metallic layer.

(5) The invention according to Claim 2, 3 or 4 wherein said other surface is substantially flat such that when formed into a sleeve it faces inwardly and forms substantially a cylinder for intimately contacting an outer cylindrical surface of the cable construction.

(6) The invention according to Claims 2, 3, 4 or 5 wherein said other surface is substantially bare.

(7) The invention according to any one of claims 2 to 6 wherein said tape includes a plurality of longitudinal recesses defined therein, each of said recesses having therein a strip of material including a water blocking hydrophilic swelling agent.

(8) The invention according to any one of Claims 2 to 7 wherein metallic layer includes a plurality of convolutions forming a plurality of recesses in one surface of said layer and a plurality of offset recesses in said other surface of said layer.

(9)   The invention according to Claim 8 wherein said each convolution is shaped such that the layer forms a flat surface portion defining part of said other surface and then turns back substantially parallel to said surface portion over a part of the width thereof and then turns back again parallel to the surface portion to define another flat surface portion defining part of said one surface.

(10)   The invention according to any preceding claim wherein said polyolefin material is ethylene- acrylic acid copolymer.

(11)   The invention according to any preceding claim including a second strip of thermally bondable polyolefin material on said one surface at the other of said edges, said material being arranged for thermal bonding to said polyolefin material.

(12)   An electrical power cable comprising a core of conductors, a semi-conductive layer surrounding said core, an insulating layer surrounding said semi-conductive layer, a second semi-conductive layer surrounding said insulating layer and a shielding tape surrounding said second semi-conductive layer, said shielding tape comprising a shielding tape according to any preceding claim.

0213946

FIG.1

FIG.2

FIG.3

FIG.4

FIG. 5